# EUROPÄISCHE PATENTSCHRIFT

(11) **EP 2 924 311 B1**
(45) Veröffentlichungstag und Bekanntmachung des Hinweises auf die Patenterteilung: **01.01.2020**
(21) Anmeldenummer: 15155511.7
(22) Anmeldetag: 18.02.2015
(51) Int. Cl.: F16D 25/06

(54) **Zentralausrücker für eine hydraulische oder pneumatische Kupplungsbetätigungseinrichtung, vorzugsweise für ein Kraftfahrzeug**
Central clutch release for a hydraulic or pneumatic clutch actuating device, in particular for a motor vehicle
Butée hydraulique pour un dispositif d'actionnement d'embrayage hydraulique ou pneumatique, en particulier pour un véhicule automobile

(30) Priorität: 14.03.2014 DE 102014204723
(43) Veröffentlichungstag der Anmeldung: 30.09.2015
(73) Patentinhaber: Schaeffler Technologies AG & Co. KG, 91074 Herzogenaurach (DE)
(72) Erfinder: Wagner, Philippe, 45000 Orléans (FR)

(56) Entgegenhaltungen:
- DE-A1- 2 330 750
- US-A- 4 286 686
- US-A1- 2011 315 503

## Beschreibung

Die Erfindung betrifft einen Zentralausrücker für eine hydraulische oder pneumatische Kupplungsbetätigungseinrichtung, vorzugsweise für ein Kraftfahrzeug, welcher drehfest mit einer Kupplungseinheit verbunden ist, und einen ringförmigen Druckraum aufweist, in welchem ein axial beweglicher Kolben gelagert ist, der mit einer Kupplung in einer Wirkverbindung steht, wobei der Kolben durch ein Fluid betätigbar ist, welches durch eine Druckleitung in den Druckraum eingebracht wird, die mit einem feststehenden, eine Eingangswelle umfassenden Adaptergehäuse verbunden ist, wobei das Adaptergehäuse zur Aufnahme der Drehbewegung der Kupplung mindestens eine Drehdurchführung aufweist.

Es sind ausrücklagerfreie Zentralausrücker für hydraulische oder pneumatische Kupplungsbetätigungseinrichtungen bekannt, die ein Zylindergehäuse, welches einen ringförmigen Druckraum umfasst, aufweisen, wobei in dem Druckraum ein axial beweglicher Kolben gelagert ist, der mit einer Kupplung in einer Wirkverbindung steht. Der Zentralausrücker ist damit mit einer Kupplungseinheit verbunden und dreht mit dieser. Eine Zufuhr eines Fluids, welches den Kolben betätigt, in den Druckraum erfolgt über einen feststehenden Adapter, der in einer Getriebeglocke angeordnet ist. Dieser Adapter weist dabei Drehdurchführungen auf, um die von der Kupplungseinheit und somit auch von dem Zentralausrücker ausgeführte Drehbewegung aufzunehmen.

Dabei ist es nachteilig, dass bei dem Zentralausrücker die Geschwindigkeiten der Drehbewegung an der Drehdurchführung relativ hoch sind, was zu einem Verschleiß an der, die Drehdurchführung bildenden Dichtung führt. Solche Reibverluste sind verhältnismäßig hoch. Außerdem ist der zulässige Systemdruck dieser Dichtungen abhängig von der Drehgeschwindigkeit, was bedeutet, dass der zulässige Druck umso höher sein kann, je kleiner die Relativgeschwindigkeit ist.

Aus dem Bereich der Schiffsantriebe ist in der DE 2330750 eine pneumatisch einrückbare Schaltkupplung zum Kuppeln einer umlaufenden Welle mit einem drehbaren Teil beschrieben, bei welcher der Kupplung Druckluft über einen in der umlaufenden Welle verlaufenden Druckluftkanal zuführbar ist. Weiterer Stand der Technik ist in der US 4 286 686 A sowie der US 2011/315503 A1 offenbart.

Der Erfindung liegt somit die Aufgabe zugrunde, einen Zentralausrücker anzugeben, bei welchem die Drehgeschwindigkeit an der Drehdurchführung reduziert und somit der Verschleiß an den, die Drehdurchführung bildenden Dichtungen minimiert wird.

Erfindungsgemäß wird die Aufgabe dadurch gelöst, dass die Druckleitung durch die Eingangswelle zum Druckraum geführt ist. Die Zufuhr des den Kolben betätigenden Fluids erfolgt somit durch die Eingangswelle hindurch. Dies hat den Vorteil, dass die Drehgeschwindigkeit auf den kleinstmöglichen Durchmesser der innerhalb der Eingangswelle laufenden Druckleitung reduziert wird, was dazu führt, dass Reibungsverluste reduziert werden.

Vorteilhafterweise liegt die Drehdurchführung an der Eingangswelle an. Dadurch wird eine besonders einfache Konstruktion des Zentralausrückers gewährleistet.

Gemäß der Erfindung ist ein Getriebe zwischen Kupplung und Adaptergehäuse angeordnet, wobei die, die Druckleitung umfassende Eingangswelle vom Adaptergehäuse durch das Getriebe bis zu einem, den Druckraum ausbildenden Ausrückergehäuse geführt ist, an welchem die Druckleitung fixiert ist. Die Druckleitung dreht sich somit mit der Eingangswelle. Aufgrund dieser Ausgestaltung kann sich das gesamte Ausrückergehäuse mit der Kupplung mitdrehen, ohne dass zusätzliche konstruktive Maßnahmen notwendig sind.

In einer Variante ist die Drehdurchführung außerhalb einer Getriebeglocke angeordnet. Dies hat den Vorteil, dass Umgebungstemperaturen, welche innerhalb des Getriebes und des Adaptergehäuses auftreten, nicht auf die Drehdurchführung einwirken, weshalb diese von thermischen Verformungen weitgehend verschont bleibt.

In einer Weiterbildung ist das Ausrückergehäuse auf einem Schwungrad der Kupplung befestigt, wobei der, durch das Fluid bewegte Kolben direkt an einer Tellerfeder der Kupplung angreift. Dadurch wird eine sehr kompakte und baulich kleine Kupplungseinheit generiert, welche platzsparend vorzugsweise in ein Kraftfahrzeug eingesetzt werden kann.

Um weitere Bauteile einzusparen, ist eine Kupplungsscheibe direkt auf der Eingangswelle positioniert.

Vorteilhafterweise weist zur Betätigung einer Doppelkupplung die Eingangswelle eine koaxial ausgebildete Druckleitung auf, wobei ein Fluid durch eine, den Kern der koaxialen Druckleitung bildende erste Leitung in einen ersten Druckraum einer ersten Kupplung geführt ist, während das Fluid durch eine, zwischen der ersten Leitung und einem Leitungsmantel der Druckleitung gebildete zweite Leitung in einen zweiten Druckraum einer zweiten Kupplung geleitet ist. Somit können die im Zusammenhang mit einer einfachen Kupplung beschriebenen Vorteile auch bei Doppelkupplungen genutzt werden. Auch hier sind die Druckleitungen zur Versorgung der Druckräume mit Fluid innerhalb der Eingangswelle angeordnet, was eine Belastung der Drehdurchführungen verringert und gleichzeitig den zulässigen Druck in Abhängigkeit von der Drehgeschwindigkeit zu den Drehdurchführungen einstellt.

In einer Ausgestaltung ist jeder Kolben als Anpressplatte der Kupplung ausgebildet. Dies hat insbesondere bei Doppelkupplungen den Vorteil, dass die Baugröße der Doppelkupplung weiter verringert werden kann, da auf eine separate Anpressplatte verzichtet werden kann.

In einer weiteren Ausführungsform weist das Adaptergehäuse zwei Druckleitungsanschlüsse auf, wobei der erste Druckleitungsanschluss an die erste Leitung der koaxialen Druckleitung geführt ist und der zweite Druckleitungsanschluss zwischen der ersten Leitung und dem Leitungsmantel der koaxialen Druckleitung angreift. Somit kann jede der zwei im Doppelkupplungsgetriebe angeordneten Kupplungen unabhängig voneinander mit einem Fluid zur Aktivierung der Kupplung versorgt werden.

Die Erfindung lässt zahlreiche Ausführungsformen zu. Drei davon sollen anhand der in der Zeichnung dargestellten Figuren näher erläutert werden.

Es zeigen:
- Figur 1:: ein erstes Ausführungsbeispiel des erfindungsgemäßen Zentralausrückers auf der Motorseite,
- Figur 2:: das erste Ausführungsbeispiel des erfindungsgemäßen Zentralausrückers auf der Getriebeseite,
- Figur 3:: eine Darstellung eines Druckverlaufes des ersten Ausführungsbeispiels gemäß Figur 1 und 2,
- Figur 4:: ein zweites Ausführungsbeispiel des erfindungsgemäßen Zentralausrückers,
- Figur 5:: ein erstes Ausführungsbeispiel einer erfindungsgemäßen Doppelkupplungseinheit,
- Figur 6:: ein Ausführungsbeispiel für eine Hochdruckleitung
- Figur 7:: in zweites Ausführungsbeispiel einer erfindungsgemäßen Doppelkupplungseinheit,
- Figur 8:: ein Adaptergehäuse für eine Doppelkupplungseinheit.

Gleiche Merkmale sind mit gleichen Bezugszeichen gekennzeichnet.

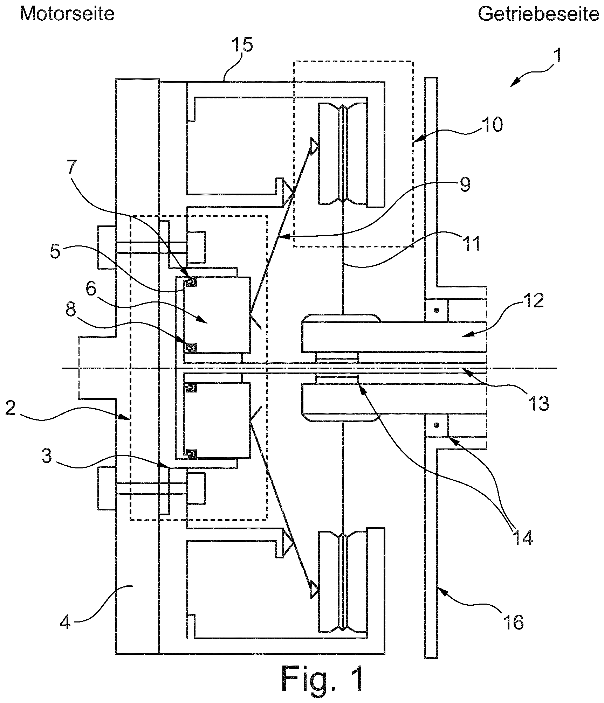

Die Figur 1 zeigt eine Kupplungseinheit 1, in welcher ein erfindungsgemäßer Zentralausrücker 2 angeordnet ist. Ein solcher Zentralausrücker 2 wird als Nehmerzylinder in einer Kupplungsbetätigungseinrichtung eines Kraftfahrzeuges eingesetzt. Der Zentralausrücker 2 umfasst ein Ausrückergehäuse 3, welches an einem Schwungrad 4 der Kupplungseinheit 1 befestigt ist. Das Ausrückergehäuse 3 bildet dabei einen Druckraum 5, in welchem axial beweglich ein Kolben 6 gelagert ist. Gegenüber dem Druckraum 5 ist der Kolben 6 mittels Dichtungen 7 und 8 abgedichtet. An der Stirnseite des Kolbens 6, welcher den Dichtungen 7 und 8 abgewandt ist, greifen die Zungen einer Tellerfelder 9 an, die die Kupplung 10 betätigen. Die Kupplung 10 umfasst einer Kupplungsplatte 11, welche an einer Eingangswelle 12 drehfest positioniert ist. Innerhalb der Eingangswelle 12 ist eine Hochdruckleitung 13 fixiert, welche in den Druckraum 5 des Ausrückergehäuses 3 hineingeführt ist und die in der Eingangswelle 12 mit mindestens zwei Lagern 13, 14, vorzugsweise Wälzlagern, gehalten ist. Die Kupplung 10 ist mit einer Kupplungsabdeckung 15 versehen.

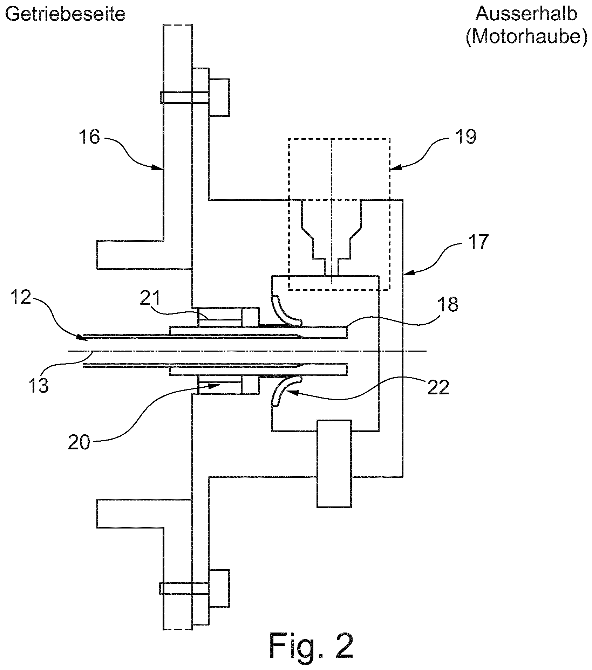

Wie aus Figur 2 hervorgeht, in welcher die Getriebeseite des Zentralausrückers 2dargestellt ist, ist die Eingangswelle 12 mit der darin angeordneten Hochdruckleitung 13 aus einer Getriebeglocke 16 herausgeführt, an welcher ein Adaptergehäuse 17 fest angeordnet ist. Das Adaptergehäuse 17 ist vorteilhafterweise mit der Getriebeglocke 16 verschraubt. Das Adaptergehäuse 17 weist einen Hohlraum 18 auf, in welchem ein Druckleitungsanschluss 19 einmündet und in welchem die offene Eingangswelle 12 mit der Hochdruckleitung 13 hineinragt. Durch den Druckleitungsanschluss 19 wird dem Zentralausrücker 2 Hydraulikflüssigkeit zugeführt, welche über den Hohlraum 18 in die Hochdruckleitung 13, welche am Adaptergehäuse 17 beispielsweise mittels zwei Wälzlager 20 und 21 gelagert ist, eindringen kann. Das feststehende Adaptergehäuse 17 umfasst die Eingangswelle 12 mit einer als PTFE-Ring ausgebildeten Drehdurchführung 22 zur Aufnahme der Drehbewegung der Eingangswelle 12.

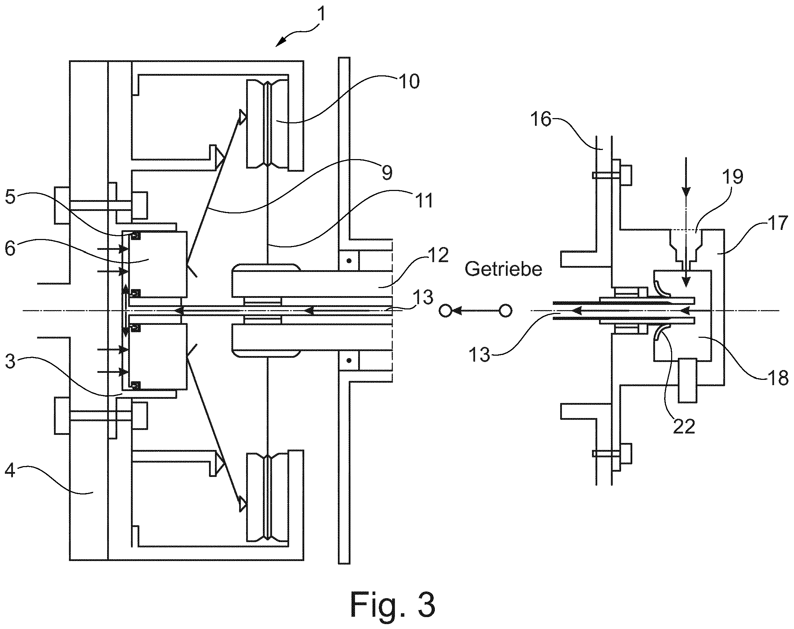

In Figur 3 ist der Druckverlauf, welchen die Hydraulikflüssigkeit vom Adaptergehäuse 17 zum Kolben 6 nimmt, dargestellt. Dabei ist zwischen der Kupplungseinheit 1 und der Getriebeglocke 16 ein nicht weiter dargestelltes Getriebe angeordnet, durch welches die Eingangswelle 12 mit der darin enthaltenen Hochdruckleitung 13 hindurchgeführt ist. Die Hydraulikflüssigkeit wird über den Druckleitungsanschluss 19 und die Hochdruckleitung 13 zum Druckraum 5 im Zentralausrücker 2 geführt, wo diese an den Kolben 6 angreift und diesen gegen die Tellerfeder 9 der Kupplung 10 drückt. Bei dieser Ausführung wird die, durch die Hochdruckleitung 13 in den Druckraum 5 eindringende Hydraulikflüssigkeit an dem Ausrückergehäuse 3 umgelenkt. Die sich im Druckraum 5 verteilende Hydraulikflüssigkeit wirkt auf den Kolben 6 in eine Richtung, welche entgegen gesetzt zur Flussrichtung der Hydraulikflüssigkeit in der Hochdruckleitung 13 ist.

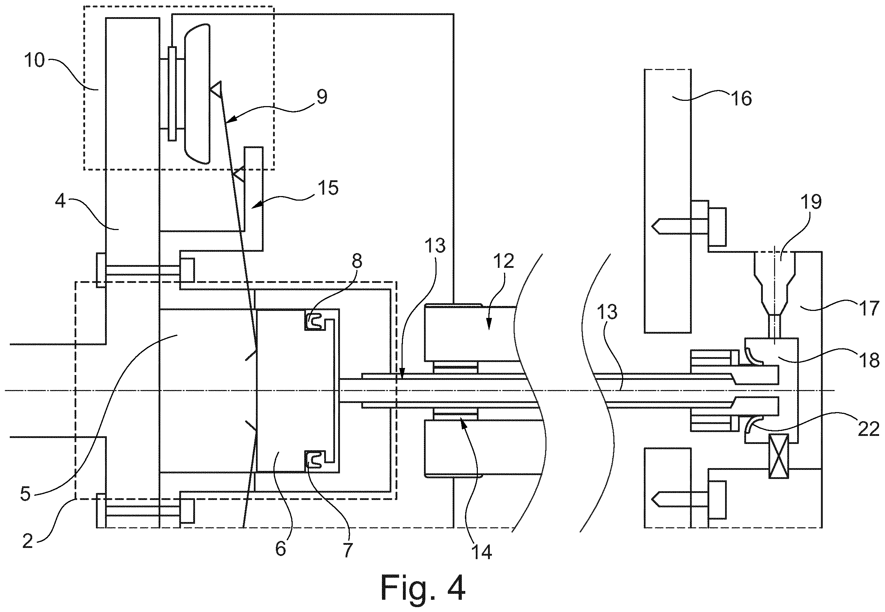

Figur 4 zeigt ein weiteres Ausführungsbeispiel des erfindungsgemäßen Zentralausrückers 2, bei welchem das Ausrückergehäuse 3 ebenfalls auf dem Schwungrad 4 befestigt ist und die sich in der Eingangswelle 12 erstreckende Hochdruckleitung 13 in den Druckraum 5 geführt ist. Da die aus der Hochdruckleitung 13 austretende Hydraulikflüssigkeit direkt in ihrer Austrittsrichtung an dem Kolben 6 angreift, wird die Tellerfeder 9 betätigt, wodurch die Kupplungsplatte 11 gegen das Schwungrad 4 gedrückt wird. Auch bei dieser Ausführung ist die Eingangswelle 12 in dem Adaptergehäuse 17 gelagert, welches an der Getriebeglocke 16 befestigt ist und an welcher die Drehdurchführung 22 angreift. Diese Anordnung des Zentralausrückers 2 in der Kupplungseinheit 1 ist besonders platzsparend, da der Druckraum 5 besonders günstig gestaltet werden kann und keine Umlenkung der Hydraulikflüssigkeit zur Betätigung des Kolbens 6 notwendig ist.

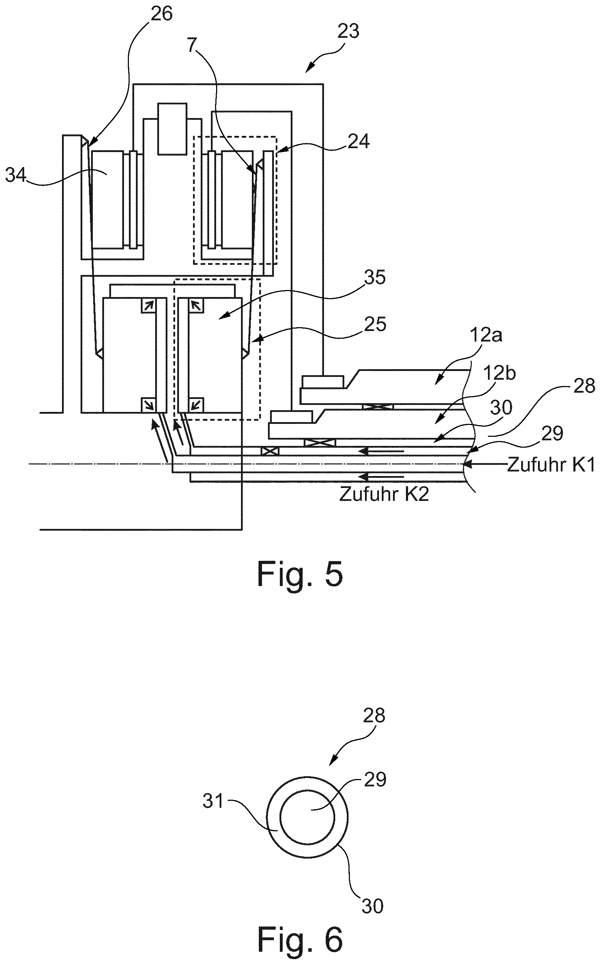

Figur 5 zeigt eine erste Ausführungsform für eine Doppelkupplungseinheit 23, bei welcher die erste Kupplung 24 unterhalb der zweiten Kupplung 25 angeordnet ist. Die Tellerfedern 26 und 27 greifen dabei an eine erste bzw. zweite Scheibe 28, 29 der jeweiligen Kupplung 24, 25 an. Auch bei dieser Ausgestaltung umfasst die Eingangswelle 12 eine Hochdruckleitung 28 zum Transport der Hydraulikflüssigkeit, welche koaxial ausgebildet ist. Bei dieser, in Figur 6 dargestellten, koaxialen Ausbildung sind eine erste Leitung 29 als Kern der Hochdruckleitung 28 ausgestaltet, durch welche die Hydraulikflüssigkeit für die zweite Kupplung 25 strömt. Diese erste Leitung 29 ist von einem Leitungsmantel 30 umgeben. Der Zwischenraum zwischen der ersten Leitung 29 und dem Leitungsmantel 30 bildet eine zweite Leitung 31, durch welche die Hydraulikflüssigkeit zur Betätigung der ersten Kupplung 24 strömt. Aufgrund dieser getrennten Führung der für die unterschiedlichen Kupplungen 24, 25 vorgesehenen Hydraulikflüssigkeiten ist eine separate Betätigung der beiden Kupplungen 24, 25 der Doppelkupplungseinheit 23 möglich. Innerhalb der Eingangswelle 12 ist die Hochdruckleitung 28 über Zwischenringe 32, 33 gelagert, so dass der Abstand zwischen den Leitungen 29, 31 konstant bleibt und die Zufuhr der Hydraulikflüssigkeit gewährleistet ist.

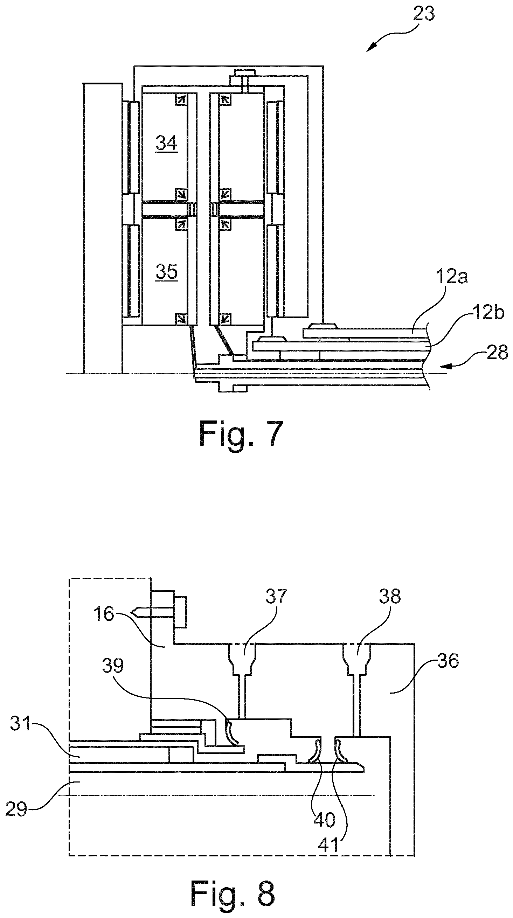

In Figur 7 sind die Kolben 34, 35 des Zentralausrückers 2 der Doppelkupplungseinheit 23 als Anpressplatte der Kupplung 24, 25 ausgestaltet, wobei die Zufuhr der Hydraulikflüssigkeit über die koaxiale Hochdruckleitung 28 erfolgt.

Ein Beispiel für ein Adaptergehäuse 36 für die Doppelkupplungseinheit 23 ist in Figur 8 dargestellt, wobei das Adaptergehäuse 36 zwei Druckleitungsanschlüsse 37, 38 aufweist. Der erste Druckleitungsanschluss 37 ist dabei mit dem Hohlraum zwischen erster Leitung 29 und dem Leitungsmantel 30 verbunden und mit zwei Drehdurchführungen 39, 40 an die Eingangswelle 12 angebunden. Der zweite Druckraumanschluss 38 ist über den Hohlraum des Adaptergehäuses 36 mit der inneren ersten Leitung 29 der koaxialen Hochdruckleitung 28 verbunden. Es bedarf nur einer Drehdurchführung 41, um die Drehbewegung der Kupplungseinheit 1 am ortsfesten Adaptergehäuse 36 aufzunehmen.

### Bezugszeichenliste

- 1: Kupplungseinheit
- 2: Zentralausrücker
- 3: Ausrückergehäuse
- 4: Schwungrad
- 5: Druckraum
- 6: Kolben
- 7: Dichtung
- 8: Dichtung
- 9: Tellerfeder
- 10: Kupplung
- 11: Kupplungsplatte
- 12: Eingangswelle
- 13: Hochdruckleitung
- 14: Lager
- 15: Kupplungsabdeckung
- 16: Getriebeglocke
- 17: Adaptergehäuse
- 18: Hohlraum
- 19: Druckleitungsanschluss
- 20: Wälzlager
- 21: Wälzlager
- 22: Drehdurchführung
- 23: Doppelkupplungseinheit
- 24: Erste Kupplung
- 25: Zweite Kupplung
- 26: Tellerfeder
- 27: Tellerfeder
- 28: Hochdruckleitung
- 29: Erste Leitung
- 30: Leitungsmantel
- 31: Zweite Leitung
- 32: Zwischenring
- 33: Zwischenring
- 34: Kolben
- 35: Kolben
- 36: Adaptergehäuse
- 37: Druckleitungsanschluss
- 38: Druckleitungsanschluss
- 39: Drehdurchführung
- 40: Drehdurchführung
- 41: Drehdurchführung

## Patentansprüche

1. Zentralausrücker für eine hydraulische oder pneumatische Kupplungsbetätigungseinrichtung, vorzugsweise für ein Kraftfahrzeug, wobei der Zentralausrücker (2) drehfest mit einer Kupplungseinheit (1, 23) verbunden ist, und einen ringförmigen Druckraum (5) aufweist, in welchem ein axial beweglicher Kolben (6; 34, 35) gelagert ist, der mit einer Kupplung (10; 24, 25) in einer Wirkverbindung steht, wobei der Kolben (6; 34, 35) durch ein Fluid betätigbar ist, welches durch eine Druckleitung (13, 28) in den Druckraum (5) eingebracht wird, die mit einem feststehenden, eine Eingangswelle (12) umfassenden Adaptergehäuse (17, 36) verbunden ist, wobei das Adaptergehäuse (17, 36) zur Aufnahme der Drehbewegung der Kupplung (10; 24, 25) mindestens eine Drehdurchführung (22; 39, 40, 41) aufweist, wobei ein Getriebe zwischen Kupplung (10, 24, 25) und Adaptergehäuse (17, 36) angeordnet ist, wobei die, die Druckleitung (13, 28) umfassende Eingangswelle (12) vom Adaptergehäuse (17, 36) durch das Getriebe bis zu einem, den Druckraum (5) bildenden Ausrückergehäuse (3) geführt ist, an welchem die Druckleitung (13, 28) fixiert ist, und wobei.die Druckleitung (13, 28) durch die Eingangswelle (12) zum Druckraum (5) geführt ist.

2. Zentralausrücker nach Anspruch 1, **dadurch gekennzeichnet, dass** die Drehdurchführung (22; 39, 40, 41) an der Eingangswelle (12) anliegt.

3. Zentralausrücker nach Anspruch 1 oder 2, **dadurch gekennzeichnet, dass** die Drehdurchführung (22; 39, 40, 41) außerhalb einer Getriebeglocke (16) ausgebildet ist.

4. Zentralausrücker nach Anspruch 3, **dadurch gekennzeichnet, dass** das Adaptergehäuse (17, 36) an der Getriebeglocke (16) befestigt ist.

5. Zentralausrücker nach einem der vorstehenden Ansprüche, **dadurch gekennzeichnet, dass** das Ausrückergehäuse (3) auf einem Schwungrad (4) der Kupplungseinheit (1) befestigt ist, wobei der durch das Fluid bewegte Kolben (6) direkt an einer Tellerfeder (9) der Kupplung (10) angreift.

6. Zentralausrücker nach mindestens einem der vorhergehenden Ansprüche, **dadurch gekennzeichnet, dass** eine Kupplungsscheibe (11) direkt auf der Eingangswelle (12) positioniert ist.

7. Zentralausrücker nach mindestens einem der vorhergehenden Ansprüche, **dadurch gekennzeichnet, dass** zur Betätigung einer Doppelkupplung (23) die Eingangswelle (12) eine koaxial ausgebildete Druckleitung (28) umfasst, wobei ein Fluid durch eine, den Kern der koaxialen Druckleitung (28) bildende erste Leitung (29) in einen ersten Druckraum einer ersten Kupplung (24) geführt ist, während das Fluid durch eine, zwischen der ersten Leitung (29) und einem Leitungsmantel (30) der Druckleitung (28) gebildeten zweiten Leitung (31) in einen zweiten Druckraum einer zweiten Kupplung (25) geleitet ist.

8. Zentralausrücker nach Anspruch 8, **dadurch gekennzeichnet, dass** jeder Kolben (34, 35) als Anpressplatte der Kupplung (24, 25) ausgebildet ist.

9. Zentralausrücker nach Anspruch 7 oder 8, **dadurch gekennzeichnet, dass** das Adaptergehäuse (36) zwei Druckleitungsanschlüsse (37, 38) aufweist, wobei der erste Druckleitungsanschluss (37) an die erste Leitung (29) der koaxialen Druckleitung (28) geführt ist und der zweite Druckleitungsanschluss (38) zwischen der ersten Leitung (29) und dem Leitungsmantel (30) der koaxialen Druckleitung (28) angreift.

## Claims

1. Central clutch operator for a hydraulic or pneumatic clutch actuating device, preferably for a motor vehicle, the central clutch operator (2) being connected fixedly to a clutch unit (1, 23) so as to rotate with it, and having an annular pressure space (5), in which an axially movable piston (6; 34, 35) is mounted which is operatively connected to a clutch (10; 24, 25), it being possible for the piston (6; 34, 35) to be actuated by way of a fluid which is introduced into the pressure space (5) by way of a pressure line (13, 28) which is connected to a stationary adapter housing (17, 36) which comprises an input shaft (12), the adapter housing (17, 36) having at least one rotary leadthrough (22; 39, 40, 41) for absorbing the rotational movement of the clutch (10; 24, 25), a transmission being arranged between the clutch (10, 24, 25) and the adapter housing (17, 36), the input shaft (12) which comprises the pressure line (13, 28) being routed from the adapter housing (17, 36) through the transmission as far as a clutch operator housing (3) which forms the pressure space (5) and on which the pressure line (13, 28) is fixed, and the pressure line (13, 28) being routed through the input shaft (12) to the pressure space (5).

2. Central clutch operator according to Claim 1, **characterized in that** the rotary leadthrough (22; 39, 40, 41) bears against the input shaft (12).

3. Central clutch operator according to Claim 1 or 2, **characterized in that** the rotary leadthrough (22; 39, 40, 41) is configured outside a transmission bell housing (16) .

4. Central clutch operator according to Claim 3, **characterized in that** the adapter housing (17, 36) is fastened to the transmission bell housing (16).

5. Central clutch operator according to one of the preceding claims, **characterized in that** the clutch operator housing (3) is fastened on a flywheel (4) of the clutch unit (1), the piston (6) which is moved by way of the fluid acting directly on a cup spring (9) of the clutch (10).

6. Central clutch operator according to at least one of the preceding claims, **characterized in that** a clutch disc (11) is positioned directly on the input shaft (12).

7. Central clutch operator according to at least one of the preceding claims, **characterized in that** the input shaft (12) comprises a coaxially configured pressure line (28) in order to actuate a double clutch (23), a fluid being conducted through a first line (29) which forms the core of the coaxial pressure line (28) into a first pressure space of a first clutch (24), whereas the fluid is guided through a second line (31) which is formed between the first line (29) and a line shell (30) of the pressure line (28) into a second pressure space of a second clutch (25).

8. Central clutch operator according to Claim 7, **characterized in that** each piston (34, 35) is configured as a pressure plate of the clutch (24, 25).

9. Central clutch operator according to Claim 7 or 8, **characterized in that** the adapter housing (36) has two pressure line connectors (37, 38), the first pressure line connector (37) being guided onto the first line (29) of the coaxial pressure line (28), and the second pressure line connector (38) acting between the first line (29) and the line shell (30) of the coaxial pressure line (28).

## Revendications

1. Dispositif de désembrayage central d'un dispositif d'actionnement d'embrayage hydraulique ou pneumatique, de préférence d'un véhicule automobile, le dispositif de désembrayage (2) étant relié solidairement en rotation à une unité d'accouplement (1, 23) et comportant une chambre de pression annulaire (5) dans laquelle est monté un piston (6 ; 34, 35) à déplacement axial qui est en liaison fonctionnelle avec un accouplement (10 ; 24, 25), le piston (6 ; 34, 35) pouvant être actionné par un fluide qui est introduit dans la chambre de pression (5) par un conduit de pression (13, 28) qui est relié à un boîtier d'adaptateur fixe (17, 36) comprenant un arbre d'entrée (12), le boîtier d'adaptateur (17, 36) comportant au moins un passage rotatif (22 ; 39, 40, 41) pour recevoir le mouvement de rotation de l'accouplement (10 ; 24, 25), un engrenage étant disposé entre l'accouplement (10, 24, 25) et le boîtier d'adaptateur (17, 36), l'arbre d'entrée (12) qui comprend le conduit de pression (13, 28) étant guidé depuis le boîtier d'adaptateur (17, 36) jusqu'à un boîtier de dispositif de désembrayage (3) qui forme la chambre de pression (5) et auquel le conduit de pression (13, 28) est fixé et le conduit de pression (13, 28) étant guidé vers la chambre de pression (5) à travers l'arbre d'entrée (12) .

2. Dispositif de désembrayage central selon la revendication 1, **caractérisé en ce que** le passage rotatif (22 ; 39, 40, 41) vient en appui sur l'arbre d'entrée (12).

3. Dispositif de désembrayage central selon la revendication 1 ou 2, **caractérisé en ce que** le passage rotatif (22 ; 39, 40, 41) est fixé à l'extérieur d'une cloche d'engrenage (16).

4. Dispositif de désembrayage central selon la revendication 3, **caractérisé en ce que** le boîtier d'adaptateur (17, 36) est fixé à la cloche d'engrenage (16).

5. Dispositif de désembrayage central selon l'une des revendications précédentes, **caractérisé en ce que** le boîtier de dispositif de désembrayage (3) est fixé sur un volant d'inertie (4) de l'unité d'accouplement (1), le piston (6) déplacé par le fluide agissant directement sur un ressort à disque (9) de l'accouplement (10).

6. Dispositif de désembrayage central selon l'une au moins des revendications précédentes, **caractérisé en ce qu'**un disque d'embrayage (11) est positionné directement sur l'arbre d'entrée (12).

7. Dispositif de désembrayage central selon l'une au moins des revendications précédentes, **caractérisé en ce que**, pour actionner un double embrayage (23), l'arbre d'entrée (12) comprend un conduit de pression coaxial (28),
un fluide étant guidé à travers un premier conduit (29), qui forme le noyau du conduit de pression coaxial (28), jusque dans une première chambre de pression d'un premier embrayage (24), tandis que le fluide est guidé par un deuxième conduit (31), formé entre le premier conduit (29) et une gaine (30) du conduit de pression (28), jusque dans une deuxième chambre de pression d'un deuxième accouplement (25).

8. Dispositif de désembrayage central selon la revendication 7, **caractérisé en ce que** chaque piston (34, 35) est conçu sous la forme d'une plaque de pression de l'accouplement (24, 25).

9. Dispositif de déverrouillage central selon la revendication 7 ou 8, **caractérisé en ce que** le boîtier d'adaptateur (36) comporte deux raccords de conduit sous pression (37, 38), le premier raccord de conduit de pression (37) étant guidée vers le premier conduit (29) du conduit de pression coaxial (28) et le deuxième raccord de conduit de pression (38) s'engageant entre le premier conduit (29) et la gaine (30) du conduit de pression coaxial (28).
